(19) **Europäisches Patentamt / European Patent Office / Office européen des brevets**

(11) **EP 2 424 116 B1**

(12) **EUROPEAN PATENT SPECIFICATION**

(45) Date of publication and mention
of the grant of the patent:
**17.04.2013 Bulletin 2013/16**

(51) Int Cl.:
*H03M 5/08* (2006.01)    *H04L 25/03* (2006.01)
*H04L 25/49* (2006.01)

(21) Application number: **10305908.5**

(22) Date of filing: **23.08.2010**

(54) **A method for pulse length modulation of signals, and a modulation device therefor**

Verfahren zur Pulslängenmodulation von Signalen und dazugehörige Vorrichtung

Procédé de modulation d'impulsions en durée et dispositif correspondant

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**29.02.2012 Bulletin 2012/09**

(73) Proprietor: **Alcatel Lucent**
**75007 Paris (FR)**

(72) Inventors:
 • **Haslach, Christoph**
  **70178 Stuttgart (DE)**
 • **Maier, Simone**
  **70565 Stuttgart (DE)**

(74) Representative: **Kleinbub, Oliver et al**
 **Alcatel-Lucent Deutschland AG**
 **Intellectual Property & Standards**
 **Lorenzstrasse 10**
 **70435 Stuttgart (DE)**

(56) References cited:
 **US-A1- 2008 197 935    US-B1- 6 762 704**

 • **ROSNELL S ET AL: "Bandpass pulse-width modulation (BP-PWM)" IEEE MTT-S INTERNATIONAL MICROWAVE SYMPOSIUM - IEEE MWSYM 2005, 12 June 2005 (2005-06-12), pages 731-734, XP010844573 NJ, USA ISBN: 978-0-7803-8846-8**

**Description**

**Field of the invention**

The invention relates to a method for pulse length modulation of signals, and a modulation device adapted to perform said method.

**Background**

In order to support highly efficient switching power amplifiers, signals with continuous amplitude, or multi-level signals, need to be converted to 2-level signals. In general, this transformation is executed by so-called delta sigma modulators (DSM), also called sigma delta modulators, or pulse length modulators (PLM), also called pulse width modulators.

These so-called pulse length modulators (PLM) are promising modulator concepts e.g. for highly efficient class-S power amplifiers used for the amplification of radio signals to be transmitted over an air interface in a communication network. In principle, they allow for an ideal conversion of signals with continuous amplitude and limited bandwidth to a time continuous 2-level signal. This 2-level signal is perfectly suited for switching amplifier stages. The 2-level signal can be reconverted to the continuous amplitude signal simply by a reconstruction filter after the amplification stage.

Further applications of pulse length modulators comprise the control of the supply of electrical power for other devices such as in speed control of electric motors, operation of so-called class-D audio switching amplifiers or brightness control of light sources.

**Summary**

There are several architectures to implement pulse length modulators. In principle, an analogue implementation works as described in the following.

A signal with a continuous amplitude is fed to a comparator as a first input signal. The second input signal to the comparator is a sawtooth signal. As soon as the ascending amplitude of the sawtooth signal has the same value as the continuous amplitude signal, the output of the comparator switches from voltage-high (VH) to voltage-low (VL). The falling edge of the sawtooth signal resets the output of the comparator to voltage high (VH). The output of the comparator is the PLM signal.

Depending on the implementation, the first input of the comparator may also be the sampled version of the continuous amplitude signal, sampled at equidistant time instances. Due to ease of description, we will use this version in the following.

The lengths of the generated PLM-pulses shall be linearly proportional to the amplitude of the input signal samples. However, this is not really the case, e.g. due to non-ideal components, e.g. for generating the sawtooth signal or due to a non-ideal comparator.

E.g., depending on the high sampling frequencies required, the sawtooth signal can only be generated in a suboptimal way, e.g. due to bandwidth limitations. This may result in a flattening of the sawtooth waveform.

Such distortions have severe impact on the signal quality, leading e.g. to an increase of the error vector magnitude (EVM) or a violation of the spectrum emission mask.

The object of the invention is thus to propose a method for pulse length modulation of signals with an increased signal quality.

In the patent application US 2008/0197935 A1, an arrangement for pulse-width modulating an input signal is provided. The non-linear distortion generated in the pulse-width modulator is precompensated by applying a signal with reversed error in the pulse width modulator. The signal with reversed error is generated by a further pulse-width modulator that receives the input signal and whose output signal is subtracted from twice the input signal.

The basic idea of the invention is that a so-called pseudo-error monitor is employed. The idea is to duplicate the original input signal path, leading to a main or data signal path and a redundant signal path, which is also called monitor signal path, and to compare the signals of the two signal paths after pulse length modulation in a compare block by means of an exclusive or (EXOR) operation or by means of subtracting the signals of the two paths. The result of the comparison of the two pulse length modulated signals is then used to correct the input signals by means of so-called precompensation.

Due to this redundant signal path, it is possible to modify the monitor signal path and to evaluate the effects of such a modification without disturbing the data signal path. The principle incorporates the further advantage, that by comparing the output of the data signal path and of the redundant signal path after pulse length modulation, one can derive the impacts on the output signal that origin from slight or significant modifications of system parameters or of the input signal. E.g. if a single pulse of the monitor sequence is suppressed, e.g. by suppressing a single sample of a digital input sequence to the monitor pulse length modulator, the output of the compare block corresponds to the suppressed pulse. This pulse can be measured, and the deviation from the ideal and expected pulse length can be used for precompensation of input signals of the pulse length modulators of the two paths.

The object is thus achieved by a method for pulse length modulation of signals according to claim 1 and further specified in claims 2-10.

The object is furthermore achieved by a device for pulse length modulation of signals according to claim 11.

Further features and advantages are stated in the following description of exemplary embodiments, with reference to the figures of the drawing, which shows significant details, and are defined by the claims. The individual features can be implemented individually by themselves, or several of them can be implemented in any desired combination.

## Brief description of the figures

In the following the invention will be explained further making reference to the attached drawings.

Fig. 1 schematically shows a pulse length modulator according to the state of the art.

Fig. 2 schematically shows input signals, output signals and ideal sawtooth signals of a pulse length modulator according to the state of the art.

Fig. 3 schematically shows an input signal, an output signal and a non-ideal sawtooth signal of a pulse length modulator according to the state of the art.

Fig. 4 schematically shows a modulation device comprising two pulse length modulators and a comparing device according to an embodiment of the invention.

Fig. 5 schematically shows exemplarily the pulse length after modulation plotted against the input signal level for pulse length modulation with and without distortions.

Fig. 6 schematically shows exemplarily pulse length modulated signals of the data signal path, of the monitor signal path, and after comparison of the pulse length modulated signals of the two paths according to an embodiment of the invention.

Fig. 7 schematically shows exemplarily a switched mode power amplifier with a modulation device according to an embodiment of the invention, a switched output stage and a filter.

## Description of the embodiments

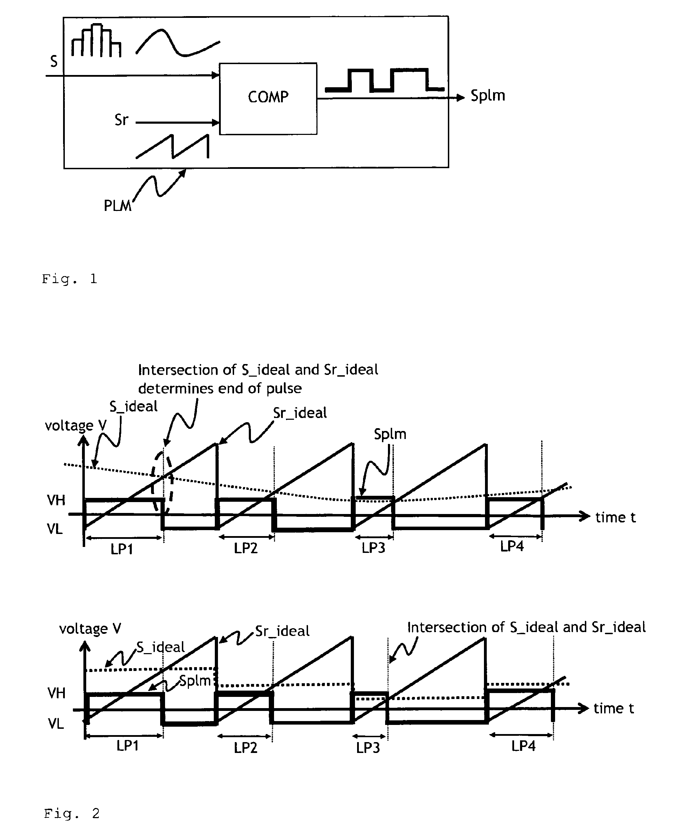

Fig. 1 schematically shows a pulse length modulator PLM according to the state of the art comprising as a basic part a comparator COMP with two inputs and one output.

Depending on the implementation, the input signal S of the pulse length modulator PLM can either be a signal with continuous amplitude, or the sampled version of the continuous amplitude signal, sampled at equidistant time instances.

The input signal S is fed to the first input of the comparator COMP, and a sawtooth signal Sr is fed to the second input of the comparator COMP. The pulse length modulated signal Splm is transmitted from the output of the comparator COMP to the output of the pulse length modulator PLM.

Fig. 2 schematically shows such input signals S_ideal, output signals Splm and ideal sawtooth signals Sr_ideal of a pulse length modulator according to the state of the art as depicted in fig. 1.

In the upper diagram in fig. 2, the voltage V of a continuous amplitude input signal S_ideal, a pulse modulated output signal Splm and an ideal sawtooth signal Sr_ideal are plotted against the time t.

In the lower diagram in fig. 2, the voltage V of a sampled version of the continuous amplitude input signal S_ideal, a pulse modulated output signal Splm and an ideal sawtooth signal Sr_ideal are plotted against the time t.

As soon as the ascending amplitude of the sawtooth signal Sr_ideal has the same value as the continuous amplitude input signal S_ideal, or as the sampled version of the continuous amplitude input signal S_ideal, the output of the comparator COMP in fig. 1 switches from voltage-high VH to voltage-low VL. The falling edge of the sawtooth signal Sr_ideal resets the output of the comparator COMP to voltage-high VH. The output signal of the comparator COMP is the PLM signal Splm comprising pulses of different length LP1-LP4.

Due to ease of description, embodiments with sampled input signals will be used in the following.

The lengths LP1-LP4 of the generated PLM pulses Splm shall be linearly proportional to the amplitude of the signal samples of the input signal S_ideal. Actually, this is not really the case due to non-ideal components, e.g. for generating the sawtooth signal Sr_ideal or due to a non-ideal comparator. E.g. depending on the high sampling frequencies required, the sawtooth signal Sr_ideal can only be generated in suboptimal way, e.g. due to bandwidth limitations. This may e.g. result in a flattening of the sawtooth waveform.

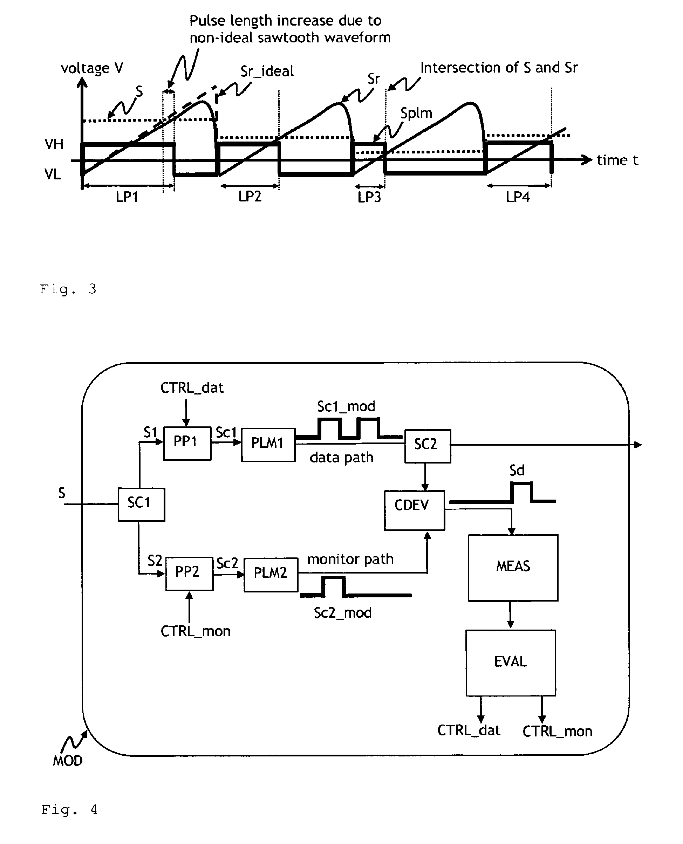

Fig. 3 schematically shows an input signal S, a pulse modulated output signal Splm and such a non-ideal sawtooth signal Sr of a pulse length modulator according to the state of the art.

In fig. 3, exemplarily the pulse length increase of the first pulse with a length of LP1 due to a flattened non-ideal sawtooth signal waveform Sr is depicted. In other words, the pulse length increase is caused by the difference between the ideal sawtooth waveform Sr_ideal and the non-ideal sawtooth waveform Sr.

Other reasons for distortions of the pulse length of the pulse length modulated signals are e.g. aging or temperature effects of pulse length modulators.

Such distortions of the pulse length of the pulse length modulated signals have severe impact on the signal quality, as they lead e.g. to a deterioration of the error vector magnitude (EVM) or the spectrum mask.

One solution to correct such distortions of the pulse length is to measure the pulse length by oversampling of the pulse length modulated output signal, and to use the measured pulse length error for a precompensation of the input signal. In order to achieve an exact measurement of the pulse length, the output of the pulse length modulator, or a part of it by using a splitter or a coupler, is sampled with a high sampling rate. Evaluating these sample values, yields a measure for the actual pulse length.

However, said solution requires a high sampling rate and should be avoided in practice. Hence, according to an embodiment of the invention, an alternative solution employing a so-called pseudo-error monitor is proposed which is exemplarily described in the following.

Fig. 4 schematically shows a modulation device MOD comprising two pulse length modulators PLM1, PLM2 and a comparing device CDEV according to an embodiment of the invention.

The modulation device MOD comprises two preprocessors PP1, PP2, two pulse length modulators PLM1, PLM2, two splitters or couplers SC1, SC2, a comparing device CDEV, a measurement device MEAS, and an evaluation device EVAL. The two pulse length modulators PLM1, PLM2 should be of same or similar kind for the method according to the invention to work properly.

The input signal path of the modulation device MOD is duplicated by means of the splitter or the coupler SC1, leading to a data signal path and to a monitor signal path. As in the embodiment in fig. 4 only the functionality of a splitter is required, the usage of a splitter SC1 is preferred.

In the data signal path, a first output of the splitter or the coupler SC1 is connected to a first input of the first preprocessor PP1. An output of the first preprocessor PP1 is connected to an input of the first pulse length modulator PLM1, which is in turn connected both to a first input of the comparing device CDEV and to an output of the modulation device MOD by means of the splitter or the coupler SC2. As in the embodiment in fig. 4 only the functionality of a splitter is required, the usage of a splitter SC2 is preferred.

In the monitor signal path, a second output of the splitter or the coupler SC1 is connected to a first input of the second preprocessor PP2. An output of the second preprocessor PP2 is connected to an input of the second pulse length modulator PLM2, which is in turn connected to a second input of the comparing device CDEV.

An output of the comparing device CDEV is connected to an input of the measurement device MEAS, and an output of the measurement device MEAS is connected to an input of the evaluation device EVAL.

A first output of the evaluation device EVAL is connected to a second input of the first preprocessor PP1, and a second output of the evaluation device EVAL is connected to a second input of the second preprocessor PP2.

An input signal S received at the input of the modulation device MOD is duplicated by means of the splitter or the coupler SC1 resulting in similar and preferably equal first and second input signals S1, S2.

In the data signal path, the first input signal S1 is precompensated in the first preprocessor PP1 e.g. by means of a lookup table or a precompensation function transforming the first input signal S1 to a corrected, i.e. precompensated first input signal Sc1.

The precompensated first input signal Sc1 is fed to the input of the first pulse length modulator PLM1, in which pulse length modulation of the precompensated input signal Sc1 is performed as described above.

The pulse length modulated first input signal Sc1_mod is fed both to the first input of the comparing device CDEV, and to the output of the modulation device MOD.

In the monitor signal path, the second input signal S2 is precompensated in the second preprocessor PP2 e.g. by means of a lookup table or a precompensation function transforming the second input signal S2 to a corrected, i.e. precompensated second input signal. Furthermore, the precompensated second input signal is modified e.g. in such a way, that one or more of the pulses of the precompensated second input signal is omitted.

The precompensated and modified second input signal Sc2 is fed to the input of the second pulse length modulator PLM2, in which pulse length modulation of the precompensated and modified second input signal Sc2 is performed as described above.

The pulse length modulated second input signal Sc2_mod is fed to the second input of the comparing device CDEV.

In the comparing device CDEV, the pulse length modulated first input signal Sc1_mod, and the pulse length modulated second input signal Sc2_mod are compared e.g. by means of an exclusive or (EXOR) operation or by means of a subtract operation, which leads to a difference signal Sd of the pulse length modulated first input signal Sc1_mod and the pulse length modulated second input signal Sc2_mod provided at the output of the comparing device CDEV.

E.g. if a single pulse of the precompensated second input signal in the monitor signal path is suppressed, i.e. if a single sample of the digital input sequence to the pulse length modulator PLM2 in the monitor signal path is suppressed, the output of the comparing device CDEV e.g. executing a subtraction of the two input signals of the comparing device CDEV corresponds to said single pulse.

The difference signal Sd is fed to the measurement device MEAS. Measurement of e.g. power or energy of the difference signal Sd in the measurement device MEAS gives information on the actual pulse length e.g. of the single pulse of the difference signal Sd. E.g. by measuring the power of the single pulse, and as the signal level VH is known, the actual pulse length can be determined. Thus, oversampling of the pulse length modulated output signal requiring a high sampling rate can be avoided.

The measurement results, as e.g. information on the actual pulse length e.g. of the single pulse, are fed to the evaluation device EVAL, in which the actual pulse length is related to an input signal S_ideal in case of an ideal, error-free pulse length modulation.

As the level of the precompensated first and second input signals Sc1, Sc2 applied to the first and second pulse length modulators PLM1, PLM2 is known in the evaluation device EVAL, e.g. by means of provision from the first or the second preprocessor PP1, PP2, it can be derived in the evaluation device EVAL, which precompensated first and second input signals Sc1, Sc2 must be applied to the first and second pulse length modulators PLM1, PLM2 to get a pulse length related to an input signal S_ideal. In other words, a precompensation of the input signal S can be performed.

Said relation between the input signal S_ideal for an error-free pulse length modulation, and the precompensated first and second input signals Sc1, Sc2 applied to the first and second pulse length modulators PLM1, PLM2 can be e.g. stored in a lookup table, or a precompensation function can be generated which relates the input signal S_ideal and the precompensated first and second input signals Sc1, Sc2.

Said lookup table or said precompensation function is e.g. implemented in the first and second preprocessors PP1, PP2, and is updated by means of control information CTRL_dat, CTRL_mon sent from the evaluation device EVAL to the first and second preprocessor PP1, PP2 respectively.

The control information CTRL_mon sent from the evaluation device EVAL to the second preprocessor PP2 comprises furthermore information which pulses shall be suppressed. E.g., one in thousand pulses can be suppressed, or pulses that have not been suppressed for certain period of time can be suppressed. Alternatively, information which pulses shall be suppressed is not comprised in the control information CTRL_mon, but predefined in the the second preprocessor PP2.

In an embodiment of the invention, the evaluation device EVAL can be integrated in the first and second preprocessor PP1, PP2 respectively, and the measurement results can be sent directly from the measurement device MEAS to the first and the second preprocessor PP1, PP2.

In a further preferred embodiment of the invention, the data signal path and the monitor signal path are interchanged repeatedly in order to equalize differences, e.g. fabrication differences, between the first and second pulse length modulator PLM1, PLM2 or the first and second preprocessor PP1, PP2.

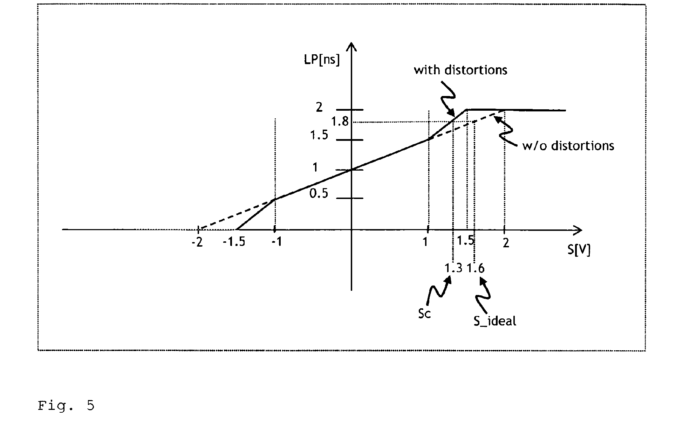

Fig. 5 schematically shows exemplarily the pulse length LP in ns after modulation, i.e. the time duration, when pulse has signal level voltage-high VH, plotted against the input signal level S in volts V for pulse length modulation with and without distortions performed e.g. in pulse length modulators PLM1 or PLM2 as depicted in fig. 4. It is assumed that the first and the second pulse length modulators PLM1, PLM2 are identical or at least similar, but suffer from non-linear mapping of pulse length and input signal level.

The dashed line indicates the pulse length after modulation without any distortions, i.e. in an ideal case, and the solid line indicates the pulse length after modulation with distortions caused e.g. by non-ideal sawtooth signals or due to aging or temperature effects.

The following formula describes the relation between the pulse length LP in ns after modulation to the input signal level S in volts V for pulse length modulation without distortions as depicted in fig. 5 by the dashed line:

$$LP = 1+(0.5*S)$$

The following formulae describe the relation between the pulse length LP in ns after modulation to the input signal level S in volts V for pulse length modulation with distortions as depicted in fig. 5 by the solid line:

$$LP = 1 + (0.5 * S) \quad \text{for} \ -1 \le S \le 1$$

$$LP = 0.5 + S \quad \text{for} \ S > 1$$

$$LP = 1.5 + S \quad \text{for} \ S < -1$$

$$\text{for} \ 0 \le LP \le 2 \ \text{and} \ -1.5 \le S \le +1.5$$

A precompensation of the input signal S yields a precompensated input signal Sc. The target is to precompensate the original input signal S in such a way, that the relation between the input signal S and the pulse length LP is linear, as depicted by the dashed line in fig. 5.

If e.g. an input signal of S = 1.6 V is pulse modulated, this would lead to a pulse length LP = 1.8 ns in case of an error-free pulse length modulation, as depicted in fig. 5. For the real case taking into account the mentioned distortions, in order to achieve the desired pulse length of 1.8 ns, a precompensated input signal of 1.3 V has to be applied, which is also depicted in fig. 5. Thus, the input signal 1.6 V must be replaced by the precompensated input signal 1.3 V.

The relations between input signals and precompensated input signals can be e.g. stored in the first and second preprocessors PP1, PP2 as depicted in fig. 4 in the form of a precompensation function, or in the form of a lookup table.

Such a lookup table relating an input signal S with a precompensated input signal Sc1 which replaces the input signal S as input value for the first pulse length modulator PLM1 is calculated by means of the formulae for the cases with and without distortions given above and may look like the following table:

| input signal S [V] | -1.6 | -1.0 | 0 | 1.0 | 1.2 | 1.6 |
|---|---|---|---|---|---|---|
| precompensated signal Sc1 [V] | -1.3 | -1.0 | 0 | 1.0 | 1.1 | 1.3 |
| pulse length [ns] | 0.2 | 0.5 | 1.0 | 1.5 | 1.6 | 1.8 |

In the following, a process for updating such a lookup table according to an embodiment of the invention is described. E.g if the exact formulae are not known exactly or if the distortions are time-variant, a non-ideal look-up table might look as follows with non-ideal entries in the last column:

| input signal S [V] | -1.6 | -1.0 | 0 | 1.0 | 1.2 | 1.5 |
|---|---|---|---|---|---|---|
| precompensated signal Sc1 [V] | -1.3 | -1.0 | 0 | 1.0 | 1.1 | 1.3 |
| pulse length [ns] | 0.2 | 0.5 | 1.0 | 1.5 | 1.6 | 1.75 |

The precompensated input signal sequence

| precompensated signal Sc1 [V] | 0.2 | 0.4 | 0.6 | 1.3 | 0.8 | 0.2 | -0.2 |
|---|---|---|---|---|---|---|---|

shall be transmitted, and e.g. in order to update the precompensation entry in the lookup table, the pulse corresponding to Sc1 = 1.3 V shall be suppressed in the monitor signal path depicted in fig. 4.

The relation between input signals and precompensated input signals as described above shall be known in the first and second preprocessors PP1, PP2 as depicted in fig. 4. Thus, it is known in the second preprocessor PP2 that in order to suppress a pulse, a precompensated input signal Sc1 = -1.5 V must be applied, as in this example, Sc1 = -1.5 V is the value, that results in a pulse length LP = 0.

Therefore, in order to suppress the pulse corresponding to Sc1 = 1.3 V, this value is replaced by the value Sc2 = -1.5 V in the monitor signal path in the second preprocessor PP2.

As a result, the following precompensated input signals Sc1 and Sc2 are transmitted in the data signal path and in the monitor signal path:

| Sc1 [V] in the data signal path | 0.2 | 0.4 | 0.6 | 1.3 | 0.8 | 0.2 | -0.2 |
|---|---|---|---|---|---|---|---|
| Sc2 [V] in the monitor signal path | 0.2 | 0.4 | 0.6 | -1.5 | 0.8 | 0.2 | -0.2 |

Said precompensated input signals Sc1 and Sc2 result in the following pulse lengths LP of the pulse length modulated signals:

| LPdata [ns] in the data signal path | 1.1 | 1.2 | 1.3 | 1.8 | 1.4 | 1.1 | 0.9 |
|---|---|---|---|---|---|---|---|
| LPmon [ns] in the monitor signal path | 1.1 | 1.2 | 1.3 | 0 | 1.4 | 1.1 | 0.9 |

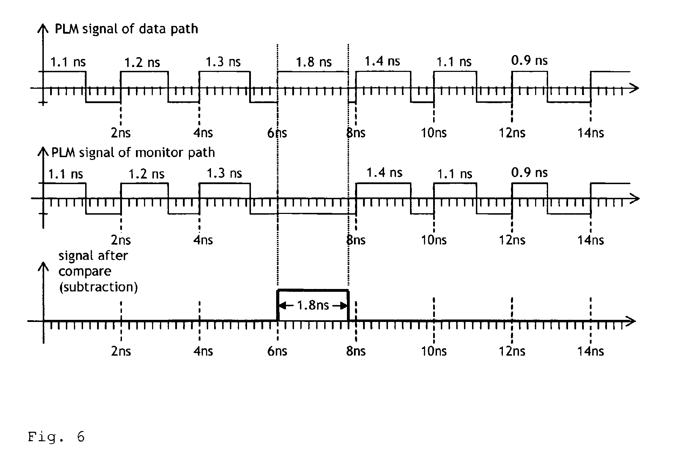

Fig. 6 shows said pulse length modulated signals of the data signal path, of the monitor signal path, and after comparison of the pulse length modulated signals of the two paths.

In the upper diagram in fig. 6, the pulse length modulated signals of the data signal path are shown.

In the middle diagram in fig. 6, the pulse length modulated signals of the monitor signal path are shown, and it can be seen, that the fourth pulse is suppressed.

Subtracting, the pulse length modulated signals of the monitor signal path from the pulse length modulated signals of the data signal path results in the difference signals shown in the lower diagram in fig. 6, which corresponds to the pulse that has been suppressed in the monitor signal path.

Measurement of e.g. power or energy of the difference signals of the compare block gives information on the actual pulse length of the single pulse of the difference signals, which is LP = 1.8 ns in this example.

LP = 1.8 ns is the target pulse length for the input signal S = 1.6 V. Hence, the table entry for Sc1 = 1.3V can be updated such that S = 1.6 V will be mapped to the value Sc1 = 1.3 V and no longer the value S=1.5V to Sc1 = 1.3 V, as given in the non-ideal lookup table above.

Other extensions or improvements of this example could be to update also other entries of the lookup table, e.g. samples that are close to the value S = 1.6 V, e.g. by means of extrapolation or interpolation.

Initially, the lookup table maps the input signals S to the precompensated input signals Sc1 according to the formula Sc1 = 1.0*S, as the relation between the input signals S and the precompensated input signals Sc1 is not yet known. The lookup table is iteratively updated as described above.

A modulation device MOD as depicted in fig. 4 can be used in a switched mode power amplifier as described in the following.

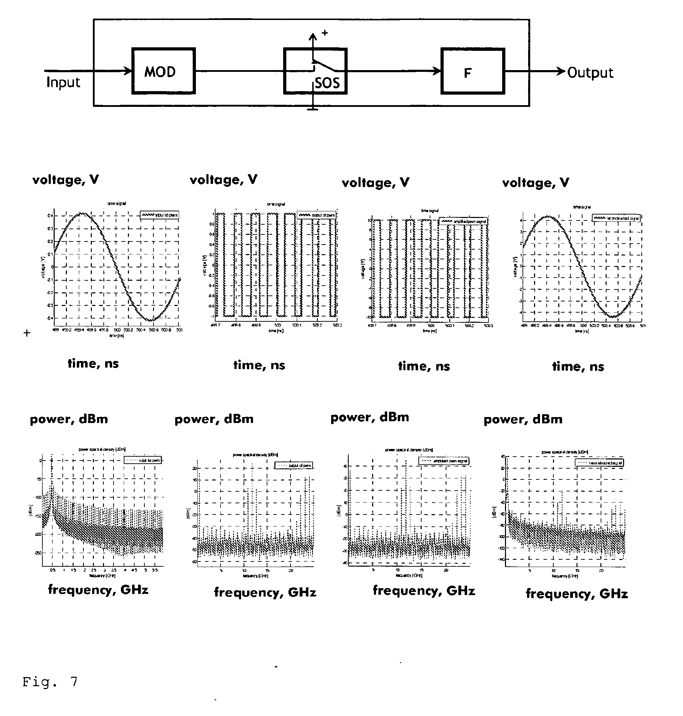

Fig. 7 is illustrating in the upper row schematically such a switched mode power amplifier that comprises a modulation device MOD as depicted in fig. 4, a switched output stage SOS, and a filter F. The switched output stage SOS comprises e.g. a driver and transistors.

The modulation device MOD has an input for receiving input signals. The output of the modulation device MOD is connected to the input of the switched output stage SOS.

The output of the switched output stage SOS is connected to the input of the filter F, and the filter F comprises an output for transmitting output signals.

In the middle row, 4 diagrams are showing the signal voltage in volts versus time in nanoseconds from left to right for signals at the input of the modulation device MOD, at the output of the modulation device MOD, at the output of the switched output stage SOS, and at the output of the filter F.

In the lower row, 4 diagrams are showing the signal power density spectrum in decibels versus frequency in gigahertz from left to right for signals at the input of the modulation device MOD, at the output of the modulation device MOD, at the output of the switched output stage SOS, and at the output of the filter F.

As can be seen from the first two diagrams in the middle row, the modulation device MOD converts analogue signals into digital 2-level signals, and said digital 2-level signals will be transmitted to the switched output stage SOS.

In the third diagram in the middle row, the amplified digital 2-level signal at the output of the switched output stage SOS is shown. In order to convert the amplified digital 2-level signals into amplified analogue signals, the filter F is e.g. a reconstruction filter preferably of low pass or band pass type for converting digital signals into analogue signals. The amplified analogue signal is shown in the last diagram in the middle row.

A base station in a wireless communication network can comprise such a switched mode power amplifier as described above, and an antenna network for transmission of signals over an air interface.

**Claims**

1. A method for pulse length modulation of signals (S), wherein

   • the signals (S) are duplicated resulting in first signals (S1) transmitted in a first path and second signals (S2) transmitted in a second path,
   • the first signals (S1) are precompensated and pulse length modulated resulting in modulated first signals (Sc1_mod),
   • the second signals are precompensated, modified and pulse length modulated resulting in modulated modified second signals (Sc2_mod),
   • the modulated first signals (Sc1_mod) are compared with the modulated modified second signals (Sc2_mod) resulting in difference signals (Sd),
   • pulse lengths of the difference signals (Sd) are determined,
   • evaluations of the pulse lengths of the difference signals (Sd) are performed,
   • and results of said evaluations are used to precompensate the first and the second signals (S1, S2).

2. A method according to claim 1, wherein the difference signals (Sd) are measured by means of at least one of the group of energy measurement, power measurement, amplitude measurement, and oversampling of the difference signals (Sd).

3. A method according to any of the preceding claims, wherein the difference signals (Sd) are generated by means of a subtract operation.

4. A method according to claim 1 or 2, wherein the difference signals (Sd) are generated by means of an exclusive or operation.

5. A method according to any of the preceding claims, wherein information which pulses forming the second signals (S2) are modified is signaled or predefined.

6. A method according to any of the preceding claims, wherein the second signals (S2) are modified in such a way, that the amount of pulses forming the difference signals (Sd) are reduced compared to the amount of pulses forming the modulated first signals (Sc1_mod).

7. A method according to any of the preceding claims, wherein the difference signals (Sd) are used to generate precompensation data stored in a lookup table used to precompensate the first and the second signals (S1, S2).

8. A method according to any of the claims 1 to 6, wherein the difference signals (Sd) are used to generate a precompensation function used to precompensate the first and the second signals (S1, S2).

9. A method according to any of the preceding claims, wherein the second signals (S2) are modified based on the time passed since the last determination of precompensation values for the different signal values.

10. A method according to any of the preceding claims, wherein the first path and the second path are interchanged repeatedly.

11. A modulation device (MOD) for pulse length modulation of signals (S), wherein the modulation device (MOD) comprises at least one processing means which is adapted to

    • duplicate the signals resulting in first signals (S1) transmitted in a first path and second signals (S2) transmitted in a second path,
    • precompensate and pulse length modulate the first signals (S1) resulting in modulated first signals (Sc1_mod),
    • precompensate, modify and pulse length modulate the second signals resulting in modulated modified second signals (Sc2_mod),
    • compare the modulated first signals (Sc1_mod) with the modulated modified second signals (Sc2_mod) resulting in difference signals (Sd),
    • determine pulse lengths of the difference signals (Sd),
    • perform evaluations of the pulse lengths of the difference signals (Sd),
    • and use results of said evaluations to precompensate the first and the second signals (S1, S2).

12. A transmitter comprising a modulation device (MOD) for pulse length modulation of signals (s) according to claim 11 and at least one amplifier for amplification of said signals.

13. A base station comprising a transmitter according to claim 12 and at least one antenna network for transmission of said signals over an air interface.

**Patentansprüche**

1. Verfahren zur Pulslängenmodulation von Signalen (S), wobei

   • die Signale (S) dupliziert werden, wodurch erste Signale (S1), welche auf einem ersten Pfad übertragen werden, und zweite Signale (S2), welche auf einem zweiten Pfad übertragen werden, entstehen,
   • die ersten Signale (S1) vorkompensiert und pulslängenmoduliert werden, wodurch modulierte erste Signale (Sc1_mod) entstehen,
   • die zweiten Signale vorkompensiert, modifiziert und pulslängenmoduliert werden, wodurch modulierte modifizierte zweite Signale (Sc2_mod) entstehen,
   • die modulierten ersten Signale (Sc1_mod) mit den modulierten modifizierten zweiten Signalen (Sc2_mod) verglichen werden, wodurch Differenzsignale (Sd) entstehen,
   • die Pulslängen der Differenzsignale (Sd) ermittelt werden,
   • Bewertungen der Pulslängen der Differenzsignale (Sd) durchgeführt werden,
   • und die Ergebnisse der besagten Bewertungen für die Vorkompensierung der ersten und der zweiten Signale (S1, S2) verwendet werden.

2. Verfahren nach Anspruch 1, wobei die Differenzsignale (Sd) anhand mindestens eines Verfahrens der Gruppe bestehend aus Energiemessung, Leistungsmessung, Amplitudenmessung und Überabtastung der Differenzsignale (Sd) gemessen werden.

3. Verfahren nach einem beliebigen der vorstehenden Ansprüche, wobei die Differenzsignale (Sd) mittels eines Subtraktionsvorgangs erzeugt werden.

4. Verfahren nach Anspruch 1 oder 2, wobei die Differenzsignale (Sd) mittels einer Exclusive-OR-Operation erzeugt werden.

5. Verfahren nach einem beliebigen der vorstehenden Absprüche, wobei die Informationen darüber, welche Pulse, die die zweiten Signale (S2) bilden, modifiziert werden, signalisiert oder vordefiniert werden.

6. Verfahren nach einem beliebigen der vorstehenden Ansprüche, wobei die zweiten Signale (S2) derart modifiziert werden, dass die Menge der Pulse, welche das Differenzsignal (Sd) bilden, im Verhältnis zur Menge der Pulse, welche die modulierten ersten Signale (Sc1_mod) bilden, reduziert wird.

7. Verfahren nach einem beliebigen der vorstehenden Ansprüche, wobei die Differenzsignale (Sd) verwendet werden, um Vorkompensierungsdaten, welche für das Vorkompensieren der ersten und der zweiten Signale (S1, S2) verwendet werden, zu erzeugen, die in einer Lookup-Tabelle gespeichert werden.

8. Verfahren nach einem beliebigen der Ansprüche 1 bis 6, wobei die Differenzsignale (Sd) verwendet werden, um eine Vorkompensierungsfunktion zu erzeugen, welche für das Vorkompensieren der ersten und der zweiten Signale (S1, S2) verwendet wird.

9. Verfahren nach einem beliebigen der vorstehenden Ansprüche, wobei die zweiten Signale (S2) auf der Basis der seit der letzten Ermittlung von Vorkompensierungswerten für die verschiedenen Signalwerte vergangenen Zeit modifiziert werden.

10. Verfahren nach einem beliebigen der vorstehenden Ansprüche, wobei der erste Pfad und der zweite Pfad mehrmals ausgetauscht werden.

11. Modulationsvorrichtung (MOD) zur Pulslängenmodulation von Signalen (S), wobei die Modulationsvorrichtung (MOD) mindestens ein Verarbeitungsmittel umfasst, welches für das Durchführen der folgenden Schritte ausgelegt ist:

• Duplizieren der Signale (S), wodurch erste Signale (S1), welche auf einem ersten Pfad übertragen werden, und zweite Signale (S2), welche auf einem zweiten Pfad übertragen werden, entstehen,
• Vorkompensieren und Pulslängenmodulieren der ersten Signale (S1), wodurch modulierte erste Signale (Sc1_mod) entstehen,
• Vorkompensieren, Modifizieren und Pulslängenmodulieren der zweiten Signale, wodurch modulierte modifizierte zweite Signale (Sc2_mod) entstehen,
• Vergleichen der modulierten ersten Signale (Sc1_mod) mit den modulierten modifizierten zweiten Signalen (Sc2_mod), wodurch Differenzsignale (Sd) entstehen,
• Ermitteln der Pulslängen der Differenzsignale (Sd),
• Durchführen von Bewertungen der Pulslängen der Differenzsignale (Sd),
• und Verwenden der Ergebnisse der besagten Bewertungen zur Vorkompensierung der ersten und der zweiten Signale (S1, S2).

12. Sender mit einer Modulationsvorrichtung (MOD) zur Pulslängenmodulation von Signalen (S) gemäß Anspruch 11 und mindestens einem Verstärker zur Verstärkung der besagten Signale.

13. Basisstation mit einem Sender gemäß Anspruch 12 und mindestens einem Antennennetzwerk für die Übertragung der besagten Signale über eine Luftschnittstelle.


**Revendications**

1. Procédé pour la modulation en longueur d'impulsion de signaux (S), dans lequel

• les signaux (S) sont dupliqués créant ainsi des premiers signaux (S1) transmis dans un premier chemin et des deuxièmes signaux (S2) transmis dans un deuxième chemin,
• les premiers signaux (S1) sont précompensés et modulés en longueur d'impulsion créant ainsi des premiers signaux modulés (Sc1_mod),
• les deuxièmes signaux sont précompensés, modifiés et modulés en longueur d'impulsion créant ainsi des deuxièmes signaux modifiés et modulés (Sc2_mod),
• les premiers signaux modulés (Sc1_mod) sont comparés aux deuxièmes signaux modifiés et modulés (Sc2_mod) créant ainsi des signaux de différence (Sd),
• des longueurs d'impulsion des signaux de différence (Sd) sont déterminées,
• des évaluations des longueurs d'impulsion des signaux de différence (Sd) sont effectuées,
• et des résultats desdites évaluations sont utilisés pour précompenser les premiers et deuxièmes signaux (S1, S2).

2. Procédé selon la revendication 1, dans lequel les signaux de différence (Sd) sont mesurés au moyen d'au moins un élément dans le groupe constitué de la mesure de l'énergie, de la mesure de la puissance, de la mesure de l'amplitude et du suréchantillonnage des signaux de différence (Sd).

3. Procédé selon l'une quelconque des revendications précédentes, dans lequel les signaux de différence (Sd) sont générés au moyen d'une opération de soustraction.

4. Procédé selon la revendication 1 ou 2, dans lequel les signaux de différence (Sd) sont générés au moyen d'une opération OU exclusif.

5. Procédé selon l'une quelconque des revendications précédentes, dans lequel des informations selon lesquelles des impulsions formant les deuxièmes signaux (S2) sont modifiées sont signalées ou prédéfinies.

6. Procédé selon l'une quelconque des revendications précédentes, dans lequel les deuxièmes signaux (S2) sont modifiés de telle manière que la quantité d'impulsions formant les signaux de différence (Sd) soit réduite par rapport à la quantité d'impulsions formant les premiers signaux modulés (Sc1_mod).

7. Procédé selon l'une quelconque des revendications précédentes, dans lequel les signaux de différence (Sd) sont utilisés pour générer des données de précompensation stockées dans une table de consultation utilisée pour précompenser les premiers et les deuxièmes signaux (S1, S2).

8. Procédé selon l'une quelconque des revendications 1 à 6, dans lequel les signaux de différence (Sd) sont utilisés pour générer une fonction de précompensation utilisée pour précompenser les premiers et les deuxièmes signaux (S1, S2).

9. Procédé selon l'une quelconque des revendications précédentes, dans lequel les deuxièmes signaux (S2) sont modifiés sur la base du temps écoulé depuis la dernière détermination des valeurs de précompensation pour la valeur de signal différente.

10. Procédé selon l'une quelconque des revendications précédentes, dans lequel le premier chemin et le deuxième chemin sont intervertis de manière répétée.

11. Dispositif de modulation (MOD) pour la modulation en longueur d'impulsion de signaux (S), dans lequel le dispositif de modulation (MOD) comprend au moins un moyen de traitement qui est adapté pour

• dupliquer les signaux créant ainsi des premiers signaux (S1) transmis dans un premier chemin et des deuxièmes signaux (S2) transmis dans un deuxième chemin,
• précompenser et moduler en longueur d'impulsion les premiers signaux (S1) créant ainsi des premiers signaux modulés (Sc1_mod),
• précompenser, modifier et moduler en longueur d'impulsion les deuxièmes signaux créant ainsi des deuxièmes signaux modifiés et modulés (Sc2_mod),
• comparer les premiers signaux modulés (Sc1_mod) aux deuxièmes signaux modifiés et modulés (Sc2_mod) créant ainsi des signaux de différence (Sd),
• déterminer des longueurs d'impulsion des signaux de différence (Sd),
• effectuer des évaluations des longueurs d'impulsion des signaux de différence (Sd),
• et utiliser des résultats desdites évaluations pour précompenser les premiers et les deuxièmes signaux (S1, S2).

12. Émetteur comprenant un dispositif de modulation (MOD) pour la modulation en longueur d'impulsion de signaux(s) selon la revendication 11 et au moins un amplificateur pour l'amplification desdits signaux.

13. Station de base comprenant un émetteur selon la revendication 12 et au moins un réseau d'antennes pour la transmission desdits signaux sur une interface radio.

Fig. 1

Fig. 2

Pulse length increase due to
non-ideal sawtooth waveform

voltage V

S

Sr_ideal

Sr

Intersection of S and Sr

Splm

VH

VL

time t

LP1    LP2    LP3    LP4

Fig. 3

CTRL_dat

S1    PP1    Sc1    PLM1    Sc1_mod    SC2

data path

S    SC1

CDEV    Sd

MEAS

S2    PP2    Sc2    PLM2    monitor path

Sc2_mod

CTRL_mon

EVAL

CTRL_dat    CTRL_mon

MOD

Fig. 4

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080197935 A1